# EUROPÄISCHE PATENTANMELDUNG

(11) **EP 2 874 105 A1**
(43) Veröffentlichungstag der Anmeldung: **20.05.2015**
(21) Anmeldenummer: 14193740.9
(22) Anmeldetag: 18.11.2014
(51) Int. Cl.: G06K 19/077, H04B 5/00

(54) **NFC-Auslesevorrichtung**

(30) Priorität: 18.11.2013 DE 102013223505
(71) Anmelder: F&R Innovations UG, 80803 München (DE)
(72) Erfinder: Lasowski, Robert, 81379 München (DE); Ulke, Frank, 80803 München (DE)
(74) Vertreter: Grunert, Marcus

(57) **Zusammenfassung**

Eine NFC-Auslesevorrichtung (2) mit einer NFC-Antenne (4) und mit einer NFC-Chip-Aufnahmebaugruppe (6) mit einer Mehrzahl von Aufnahmeplätzen (8a, 8b) für je einen NFC-Chip (10) wird vorgeschlagen, wobei ein Wahlschalter (16) vorgesehen ist, mit dem jeweils einer der NFC-Chips (10) elektrisch leitend mit der NFC-Antenne (4) verbindbar ist, wobei der Wahlschalter (16) als mechanischer Schalter (20) ausgebildet ist, und der mechanische Schalter (20) einen Antennenträger (22) mit der NFC-Antenne (4) und eine Kontaktbaugruppe (12) aufweist, und der mechanische Schalter (20) einen Chipträger (24) mit der NFC-Chip-Aufnahmebaugruppe (6) aufweist, wobei der Antennenträger (22) und der Chipträger (24) verlagerbar miteinander verbunden sind, derart, dass die Kontaktbaugruppe (12) mit jeder Gegenkontaktbaugruppe (14) eines in einen der Aufnahmeplätze eingesetzten NFC-Chips (10) elektrisch leitend in Kontakt gebracht werden kann.

## Beschreibung

Die vorliegende Erfindung betrifft eine NFC-Auslesevorrichtung.

### Stand der Technik

Aus der KR 10 2012 030 792 A ist eine zweiteilige NFC-Ausleseeinrichtung bekannt, bei der in einem ersten Gehäuseteil eine NFC-Antenne und einem zweiten Gehäuseteil eine Mehrzahl von NFC-Chips mit Anschlusskontakten fest verdrah-tet sind. Die Anschlusskontakte sind als Buchsen ausgebildet, während die Anschlusskontakte der NFC-Antenne als Stecker ausgebildet sind, die in die Buch-sen einsteckbar sind, um die NFC-Antenne mit einem der NFC-Chips zu verbin-den. Eine Auswahl eines NFC-Chips aus der Mehrzahl der NFC-Chips erfolgt dabei durch Auswahl von Buchsen, d.h., die Stecker der NFC-Antenne werden ausschließlich mit den Buchsen durch Einstecken elektrisch leitend verbunden, die dem ausgewählten NFC-Chip zugeordnet sind.

Jedoch erlaubt die NFC-Ausleseeinrichtung gemäß der KR 10 2012 030 792 A aufgrund der Festverdrahtung der NFC-Chips in dem zweiten Gehäuseteil keinen Austausch einzelner NFC-Chips, um die NFC-Auslesevorrichtung individuellen Bedürfnissen eines Nutzers anzupassen.

Des Weiteren ist ein Wechsel von einem NFC-Chip zu einem anderen NFC-Chip der NFC-Auslesevorrichtung mit einem aufwändigen Trennen und wieder Zusammenfügen des ersten und zweiten Gehäuseteils verbunden, wobei ferner die Stecker der NFC-Antenne hierbei leicht Schaden nehmen können.

Es besteht daher Bedarf an einer NFC-Auslesevorrichtung, die leichter zu handhaben ist.

### Offenbarung der Erfindung

Vor diesem Hintergrund schlägt die vorliegende Erfindung eine NFC-Auslesevorrichtung mit den Merkmalen des unabhängigen Patentanspruchs 1 vor.

### Vorteile der Erfindung

Ein wesentlicher Aspekt der vorliegenden Erfindung besteht darin, dass bei einer NFC-Auslesevorrichtung mit einer NFC-Antenne und mit einer NFC-Chip-Aufnahmebaugruppe mit einer Mehrzahl von Aufnahmeplätzen für je einen NFC-Chip ein Wahlschalter vorgesehen ist, mit dem jeweils einer der NFC-Chips elektrisch leitend mit der NFC-Antenne verbunden werden kann. Hierdurch wird erreicht, dass ein Wechsel von einem NFC-Chip zu einen anderen NFC-Chip einfacher durchführbar ist, da im Unterschied zum Stand der Technik kein aufwändiges Trennen und wieder Zusammenfügen des ersten und zweiten Gehäuseteils nötig ist, wofür eine Nutzer beide Hände benötigt. Mit dem Wahlschalter hingegen ist ein Wechsel von einem NFC-Chip auf einen anderen NFC-Chip in einem besonders bequemen Einhandbetrieb möglich. Dies ist insbesondere für physisch eingeschränkte Personen von Vorteil. Außerdem können freiliegende Stecker nun keinen Schaden mehr nehmen, und Einzelkomponenten nicht verloren gehen.

Gemäß einer Ausführungsform ist je ein Aufnahmeplatz elektrisch leitend mit einem NFC-Chip fest verdrahtet. Dabei wird fest verdrahtet verstanden, dass ein Auftrennen der elektrischen Verbindung mit einer Zerstörung der Verbindung oder seiner Komponenten einhergeht, ohne das zumindest ein Werkzeugeinsatz hierfür erforderlich ist. Ferner wird unter lösbaren elektrisch leitend Kontaktieren verstanden, dass ein werkzeugloses Auftrennen der elektrischen Verbindung möglich ist. Hierdurch wird erreicht, dass eine feste und unveränderliche Zuordnung von NFC-Chips zu Aufnahmeplätzen gegeben ist.

Gemäß einer weiteren Ausführungsform sind die Aufnahmeplätze zum lösbaren elektrisch leitenden Kontaktieren von dem in den Aufnahmeplatz eingesetzten NFC-Chips ausgebildet. Dabei wird unter lösbaren elektrisch leitend Kontaktieren verstanden, dass ein Auftrennen der elektrischen Verbindung ohne Zerstörung der Verbindung oder seiner Komponenten möglich ist. Ferner wird unter lösbaren elektrisch leitend Kontaktieren verstanden, dass ein werkzeugloses Auftrennen der elektrischen Verbindung möglich ist. Hierdurch wird erreicht, dass in freie Aufnahmeplätze der NFC-Chip-Aufnahmegruppe weitere NFC-Chips eingefügt werden können, die weitere Daten und/oder Funktionen bereitstellen. Ferner können andere NFC-Chips problemlos entfernt und durch NFC-Chips mit anderen Funktionen ersetzt werden. Somit ist die NFC-Ausleseeinrichtung einfacher durch Austausch von NFC-Chips individualisierbar.

Gemäß einer alternativen Ausführungsform weist der Wahlschalter eine Mehrzahl von steuerbaren Halbleiterschaltelementen auf. Bei den Halbleiterschaltelementen kann es sich z.B. um Transistoren, oder andere Halbleiterbauelemente mit ähnlichen Eigenschafen handeln. Hierdurch wird erreicht, dass der Wahlschalter keine beweglichen Komponenten aufweist, die alterungsbedingt Schaden nehmen könnten. Somit wird eine NFC-Auslesevorrichtung mit hoher Lebensdauer bereitgestellt, bei der die Kontaktfähigkeit über Jahre hinweg sichergestellt ist. Ferner wird so eine besonders bequeme Einfinger- bzw. Eindaumenbedienung möglich, die wiederum insbesondere für physisch eingeschränkte Personen von Vorteil ist.

Gemäß einer weiteren Ausführungsform ist der Wahlschalter als mechanischer Schalter ausgebildet. Hierdurch wird erreicht, dass für den Betrieb des Wahlschalters keine Energiequelle für elektrische Betriebsenergie erforderlich ist. Daher kann die NFC-Auslesevorrichtung einen besonders einfachen Aufbau aufweisen.

Vorteilhafterweise weist der mechanische Schalter einen Antennenträger mit der NFC-Antenne und einer Kontaktbaugruppe auf, und der mechanische Schalter weist einen Chipträger mit der NFC-Chip-Aufnahmebaugruppe auf, wobei der Antennenträger und der Chipträger verla-gerbar miteinander verbunden sind, derart, dass die Kontaktbaugruppe mit jeder Gegenkontaktbaugruppe eines in einen der Aufnahmeplätze eingesetzten NFC-Chips elektrisch leitend in Kontakt gebracht werden kann. Hierdurch wird erreicht, dass die NFC-Auslesevorrichtung einen besonders einfachen Aufbau aufweist.

Gemäß einer weiteren Ausführungsform sind der Antennenträger und der Chipträger translatorisch entlang einer Achse zueinander verlagerbar ausgebildet. Hierdurch wird erreicht, dass durch eine einfache, z.B. mittels einer Hand eines Benutzers induzierte, Schiebebewegung der Antennenträger und der Chipträger voneinander getrennt und wieder verbunden werden können, um so einen anderen NFC-Chip elektrisch leitend zu kontaktieren. Ferner kann die NFC-Auslesevorrichtung eine besonders flache Gehäuseform aufweisen, sodass die NFC-Auslesevorrichtung besonders platzsparend bei Nichtgebrauch zwischengelagert werden kann.

Gemäß einer weiteren Ausführungsform sind der Antennenträger und der Chipträger um eine Drehachse zueinander verdrehbar ausgebildet. Hierdurch wird erreicht, dass durch eine einfache, z.B. mittels einer Hand eines Benutzers induzierte, Drehbewegung der Antennenträger und der Chipträger voneinander getrennt und wieder verbunden werden können, um so einen anderen NFC-Chip elektrisch leitend zu kontaktieren. Ferner kann die NFC-Auslesevorrichtung eine optisch ansprechende, im Wesentlichen rotationssymmetrische, Gehäuseform aufweisen.

Gemäß einer weiteren Ausführungsform sind die NFC-Chip-Aufnahmebaugruppe und die NFC-Antenne in Erstreckungsrichtung der Drehachse hintereinander angeordnet. Hierdurch wird erreicht, dass die NFC-Auslesevorrichtung in radialer Richtung kompakte Abmessungen aufweist, und daher bei Nichtgebrauch besonders platzsparend zwischengelagert werden kann.

Gemäß einer weiteren Ausführungsform sind die NFC-Chip-Aufnahmebaugruppe und die NFC-Antenne in radialer Richtung der Drehachse hintereinander angeordnet. Hierdurch wird erreicht, dass die NFC-Auslesevorrichtung in Erstreckungsrichtung der Drehachse kompakte Abmessungen aufweist, und daher bei Nichtgebrauch besonders platzsparend zwischengelagert werden kann. Ferner kann der Bereich um die Drehachse selbst materialfrei ausgebildet sein, sodass die NFC-Auslesevorrichtung ein ringförmig ausgebildetes Gehäuse aufweisen kann.

Gemäß einer weiteren Ausführungsform weist die NFC-Auslesevorrichtung eine Fensteröffnung auf, die eine optische Identifizierung des NFC-Chips erlaubt, dessen Gegenkontaktbaugruppe mit der Kontaktbaugruppe der NFC-Auslesevorrichtung elektrisch leitend in Kontakt steht. Hierdurch wird erreicht, dass die optische Identifizierung des NFC-Chips die Auswahl des gewünschten NFC-Chips deutlich vereinfacht. Dabei können die NFC-Chips je mit einer optischen Kennzeichnung, wie z.B. einem Aufdruck, versehen sein, der eine gezielte Auswahl des gewünschten NFC-Chips erleichtert.

Ein zweiter Aspekt der vorliegenden Erfindung besteht darin, dass bei einer NFC-Auslesevorrichtung mit einer NFC-Antenne und mit einer NFC-Chip-Aufnahmebaugruppe eine Mehrzahl von Aufnahmeplätzen für je einen NFC-Chip vorgesehen sind, wobei jedem Aufnahmeplatz eine Kontaktbaugruppe zum lösbaren elektrisch leitenden Kontaktieren von einer Gegenkontaktbaugruppe eines in einen der Aufnahmeplätze eingesetzten NFC-Chips zugeordnet ist. Dabei wird unter lösbaren elektrisch leitend Kontaktieren verstanden, dass ein Auftrennen der elektrischen Verbindung ohne Zerstörung der Verbindung oder seiner Komponenten möglich ist. Ferner wird unter lösbaren elektrisch leitend Kontaktieren verstanden, dass ein werkzeugloses Auftrennen der elektrischen Verbindung möglich ist. Hierdurch wird erreicht, dass in freie Aufnahmeplätze der NFC-Chip-Aufnahmegruppe weitere NFC-Chips eingefügt werden können, die weitere Daten und/oder Funktionen bereitstellen. Ferner können andere NFC-Chips problemlos entfernt und durch NFC-Chips mit anderen Funktionen ersetzt werden. Somit ist die NFC-Ausleseeinrichtung einfacher durch Austausch von NFC-Chips invidualisierbar.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Kurze Beschreibung der Zeichnungen

Figur 1 zeigt ein Ausführungsbeispiel einer NFC-Auslesevorrichtung in schematischer Darstellung,
Figur 2 zeigt ein weiteres Ausführungsbeispiel einer NFC-Auslesevorrichtung in schematischer Darstellung,
Figur 3 zeigt eine weitere Ansicht des in Figur 2 dargestellten Ausführungsbeispiels,
Figur 4 zeigt ein weiteres Ausführungsbeispiel einer NFC-Auslesevorrichtung in schematischer Darstellung,
Figur 5 zeigt eine weitere Ansicht des in Figur 4 dargestellten Ausführungs-beispiels,
Figur 6 zeigt einen NFC-Chip in schematischer Darstellung,
Figur 7 zeigt eine weitere Ansicht des in Figur 4 dargestellten Ausführungsbeispiels im Gebrauch, und
Figur 8 zeigt ein weiteres Ausführungsbeispiel einer NFC-Auslesevorrichtung in schematischer Explosionsdarstellung.

### Ausführungsform(en) der Erfindung

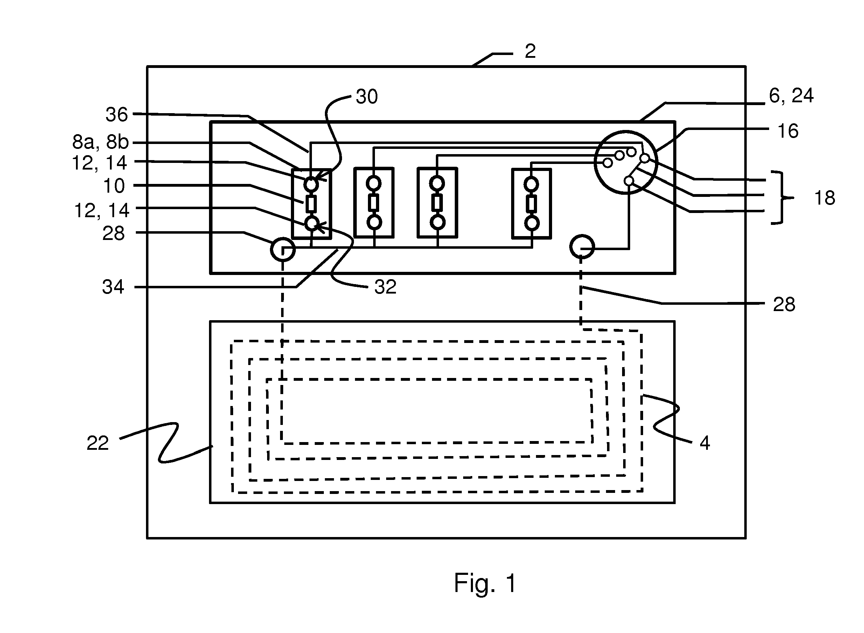

Es wird zunächst auf Figur 1 Bezug genommen.

In Figur 1 ist eine NFC-Auslesevorrichtung 2 dargestellt.

Die NFC-Auslesevorrichtung 2 im vorliegenden Ausführungsbeispiel ist zur Nahfeldkommunikation (Near Field Communication - NFC) gemäß dem Technologiestandard ISO/IEC 14643 A, ISO/IEC 14643 B, ISO 18092 ausgebildet, die es zwei Geräten ermöglicht, über eine kurze Distanz (bis ca. 10 cm) Daten und/oder Programme zu übertragen. Die Übertragung von Daten und/oder Programmen kann dabei uni- oder bidirektional erfolgen. Mit umfasst sind dabei Weiterentwicklungen der o.g. Technologiestandards sowie auch anderen Verfahren und Standards zur Nahfeldkommunikation über kurze Distanzen im Bereich von 10 cm. Die NFC-Auslesevorrichtung 2 weist im vorliegenden Ausführungsbeispiel einen Antennenträger 22 und einen Chipträger 24 auf, die beide ortsfest zueinander angeordnet sind. Dabei sind im vorliegenden Ausführungsbeispiel der Antennenträger 22 und der Chipträger 24 nebeneinander liegend angeordnet. Abweichend vom vorliegenden Ausführungsbeispiel können der Antennenträger 22 und der Chipträger 24 auch teilweise überlappend oder stapelförmig angeordnet sein.

Der Antennenträger 22 weist eine NFC-Antenne 4 zum Senden und/oder Empfangen von Daten und/oder Programmen auf. Im vorliegenden Ausführungsbeispiel ist die NFC-Antenne 4 als planarer Antennenleiter ausgebildet.

Der Chipträger 24 weist im vorliegenden Ausführungsbeispiel eine NFC-Chip-Aufnahmebaugruppe 6 auf. Die NFC-Chip-Aufnahmebaugruppe 6 weist eine Mehrzahl von Aufnahmeplätzen 8a für je einen NFC-Chip 10 auf. Im vorliegenden Ausführungsbeispiel sind vier Aufnahmeplätze 8a mit je einem eingesetzten NFC-Chip 10 dargestellt. Dabei ist aus Gründen der Übersichtlichkeit nur einer der Aufnahmeplätze 8a und nur einer der NFC-Chips 10 mit Bezugszeichen versehen worden.

Im vorliegenden Ausführungsbeispiel sind die NFC-Chips 10 mit den Aufnahmeplätze 8a fest verdrahtet, um diese elektrisch leitend zu verbinden. Dabei wird fest verdrahtet verstanden, dass ein Auftrennen der elektrischen Verbindung mit einer Zerstörung der Verbindung oder seiner Komponenten einhergeht, ohne das zumindest ein Werkzeugeinsatz hierfür erforderlich ist. Ferner wird unter lösbaren elektrisch leitend Kontaktieren verstanden, dass ein werkzeugloses Auftrennen der elektrischen Verbindung möglich ist.

Gemäß einem weiteren Ausführungsbeispiel kann jeder Aufnahmeplatz 8b zum lösbaren elektrisch leitenden Kontaktieren von in den Aufnahmeplatz eingesetzten NFC-Chips 10 ausgebildet sein. Hierzu ist dann jedem Aufnahmeplatz 8b eine Kontaktbaugruppe 12 zum lösbaren elektrisch leitenden Kontaktieren von einer Gegenkontaktbaugruppe 14 eines in einen der Aufnahmeplätze 8b eingesetzten NFC-Chips 10 zugeordnet, Dabei können die Kontaktbaugruppe 12 und die Gegenkontaktbaugruppe 14 zweiteilig ausgebildet sind.

Die Kontaktbaugruppe 12 weist dabei Einzelkontakte 30 auf, die mit Einzelkontakten 32 der Gegenkontaktbaugruppe 14 in Kontakt treten können, um diese elektrisch leitend zu kontaktieren. Dabei sind aus Gründen der Übersichtlichkeit nur je einer der Einzelkontakte 30, 32 mit Bezugszeichen versehen worden.

Die NFC-Antenne 4 ist über eine Verbindungsleitung 28 mit den Einzelkontakten 30 der Kontaktbaugruppe 12 der Aufnahmebaugruppe 8a, 8b elektrisch leitend verbunden. Hierzu weist die Verbindungsleitung 28 einen Sammelabschnitt 34 auf, der jeden der Einzelkontakte 30 der Kontaktbaugruppe 12 elektrisch leitend verbindet..

Im vorliegenden Ausführungsbeispiel ist ferner jeder der Einzelkontakte 30 der Kontaktbaugruppe 12 über Einzelleitungen 36 elektrisch leitend mit einem Wahlschalter 16 verbunden, der wiederum elektrisch leitend mit der Verbindungsleitung 28 verbunden ist. Dabei ist aus Gründen der Übersichtlichkeit nur eine der Einzelleitungen 36 mit Bezugszeichen versehen worden. Der Wahlschalter 16 ist derart ausgebildet, dass jeweils eine der Kontaktbaugruppen 12 - und damit der in den dazugehörigen Aufnahmeplatz 8a, 8b eingesetzte NFC-Chip 10 - elektrisch leitend mit der NFC-Antenne 4 verbunden werden kann.

Der Wahlschalter 16 weist im vorliegenden Ausführungsbeispiel eine Mehrzahl von steuerbaren Halbleiterschaltelementen 18 auf, bei denen es sich z.B. um Transistoren handeln kann. Durch Ansteuern je eines der steuerbaren Halbleiterschaltelemente 18 kann einer der NFC-Chip10 elektrisch leitend mit der NFC-Antenne 4 verbunden werden, während die anderen NFC-Chips 10 von der NFC-Antenne 4 elektrisch getrennt sind. Dann können Daten und/oder Programme von dem ausgewählten NFC-Chip 10 ausgelesen werden. Die steuerbaren Halbleiterschaltelemente 18 können in einem integrierten Schaltkreis zusammengefasst sein. Zum Ansteuern kann z.B. ein Kipp- oder Drehschalter (nicht darge-stellt) vorgesehen sein, der elektrisch leitend mit jedem der steuerbaren Halbleiterschaltelementen 18 verbunden ist.

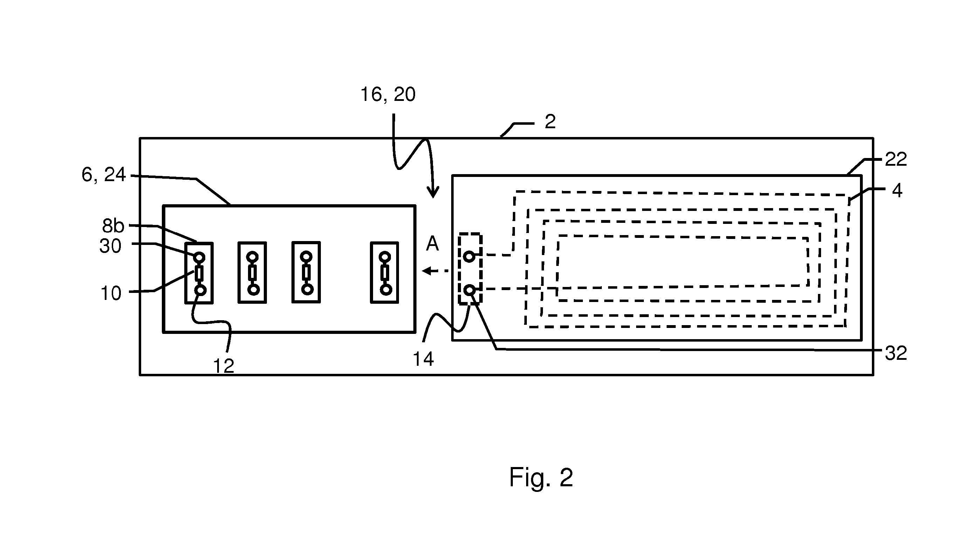

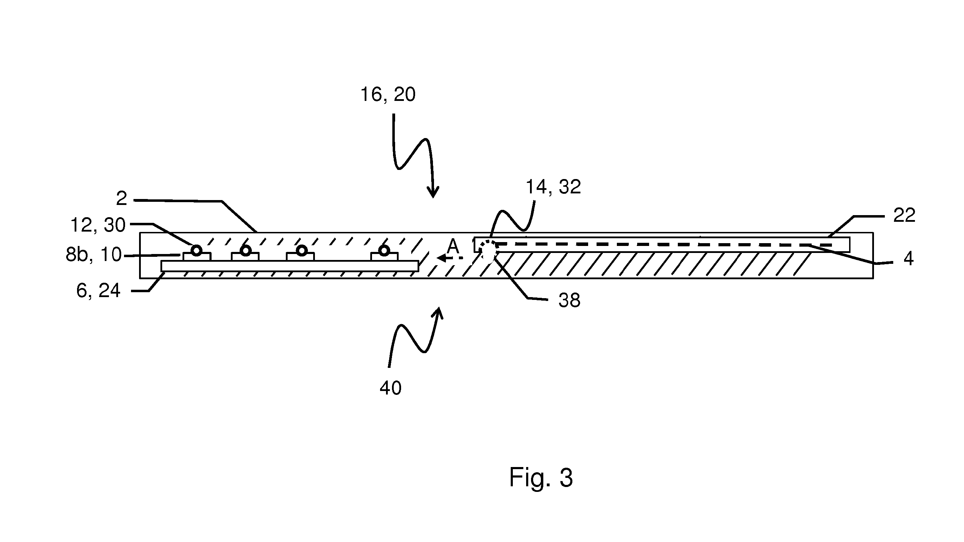

Es wird nun auf die Figuren 2 und 3 Bezug genommen.

Das in den Figuren 2 und 3 dargestellte Ausführungsbeispiel unterscheidet sich von dem in Figur 1 gezeigten Ausführungsbeispiel dadurch, das der Antennenträger 22 mit der NFC-Antenne 4 in Bezug zu dem Chipträger 24 mit der NFC-Chip-Aufnahmebaugruppe 6 translatorisch in Richtung einer Achse A verlagert werden kann. Ferner sind in dem in den Figuren 2 und 3 dargestellte Ausführungsbeispiel die Aufnahmeplätze 8b zum lösbaren elektrisch leitenden Kontaktieren von den in den Aufnahmeplätzen 8b eingesetzten NFC-Chips 10 ausgebildet.

Somit bilden im vorliegenden Ausführungsbeispiel der Antennenträger 22 und der Chipträger 24 zusammen den Wahlschalter 16, der im vorliegenden Ausführungsbeispiel als mechanischer Schalter 20 ausgebildet ist. Durch Verlagern in Richtung der Achse A kann die Kontaktbaugruppe 12 eines NFC-Chips 10 mit jeder Gegenkontaktbaugruppe 14 elektrisch leitend in Kontakt gebracht werden, der in einen der Aufnahmeplätze 8 eingesetzt ist.

Im vorliegenden Ausführungsbeispiel sind die Einzelkontakte 32 der Gegenkontaktbaugruppe 14 in einer Vertiefung 38 angeordnet (siehe Figur 3). Durch die komplementäre, im vorliegenden Ausführungsbeispiel noch oben gewölbte Ausbildung der Einzelkontakte 30 der Kontaktbaugruppe 12 bilden die Einzelkontakte 30 der Kontaktbaugruppe 12 und die Einzelkontakte 32 der Gegenkontaktbaugruppe 14 eine Rastverbindung 40, die die Position des Antennenträgers 22 und des Chipträgers 24 fixiert. Dabei ist die Rastverbindung 40 derart ausgebildet, dass sie durch manuelles Aufbringen einer Mindestkraft ohne weitere Handlungen gelöst werden kann. Nach Lösen der Rastverbindung 40 kann einer der NFC-Chips10 durch Verlagern des Antennenträgers 22 in Richtung der Achse A elektrisch leitend mit der NFC-Antenne 4 verbunden werden, während die anderen NFC-Chips 10 von der NFC-Antenne 4 elektrisch getrennt sind. Dann können Daten und/oder Programme von dem ausgewählten NFC-Chip 10 ausgelesen werden.

Insbesondere anhand der Figur 3 ist zu erkennen, dass die NFC-Auslesevorrichtung 2 im vorliegenden Ausführungsbeispiel eine besonders flache Bauform aufweist, sodass die NFC-Auslesevorrichtung 2 besonders platzsparend bei Nichtgebrauch zwischengelagert werden kann.

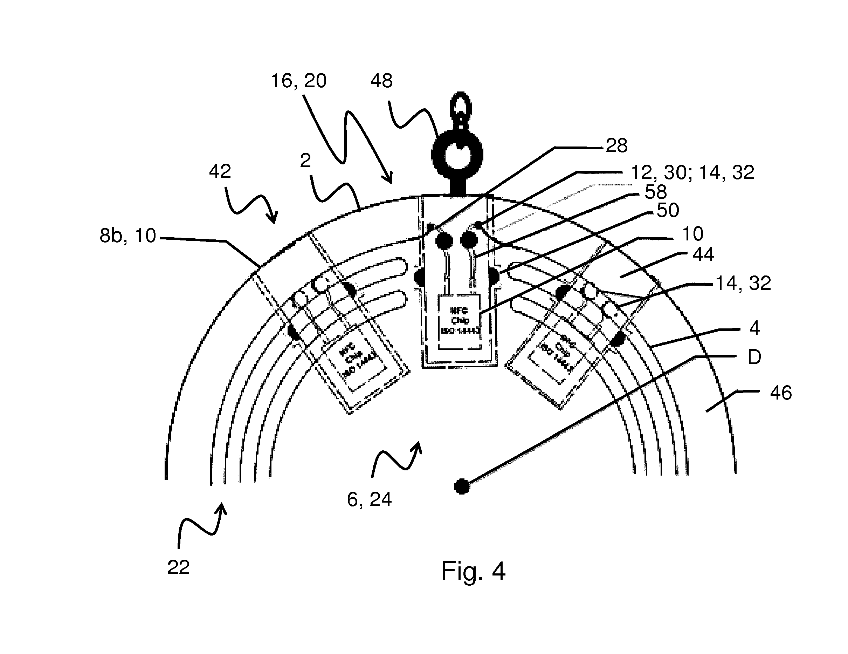

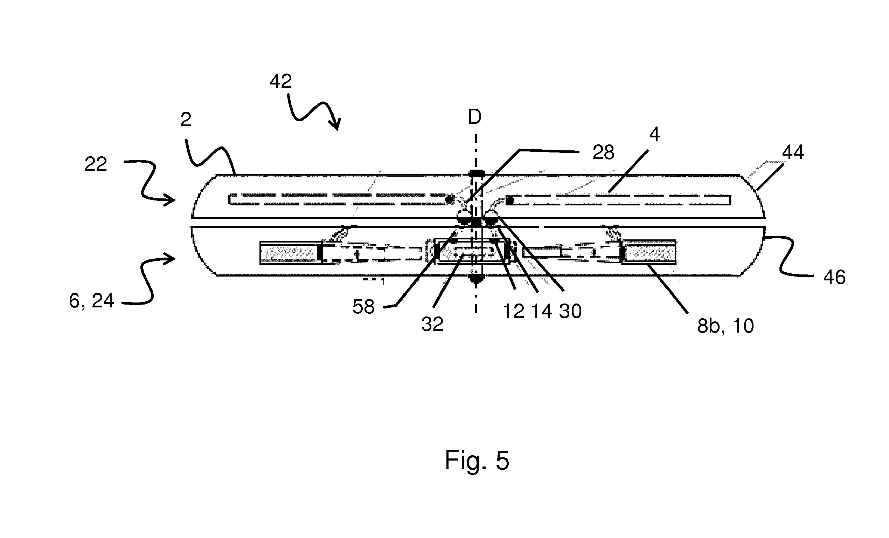

Es wird nun auf die Figuren 4 und 5 Bezug genommen.

Das in den Figuren 4 und 5 dargestellte Ausführungsbeispiel unterscheidet sich von dem in den Figuren 2 und 3 gezeigten Ausführungsbeispiel dadurch, dass der Antennenträger 22 mit der NFC-Antenne 4 in Bezug zu dem Chipträger 24 mit der NFC-Chip-Aufnahmebaugruppe 6 um eine Drehachse D verdrehbar ausgebildet ist. Auch in dem in den Figuren 4 und 5 dargestellte Ausführungsbeispiel die Aufnahmeplätze 8b zum lösbaren elektrisch leitenden Kontaktieren von in den Aufnahmeplätzen 8b eingesetzten NFC-Chips 10 ausgebildet.

Dabei sind im vorliegenden Ausführungsbeispiel die Aufnahmeplätze 8b der Aufnahmebaugruppe 6 zur Aufnahme von NFC-Chips 10 entlang einer Kreisbahn um die Drehachse D angeordnet. Der Abstand zwischen den einzelnen Aufnahmeplätzen 8b ist im vorliegenden Ausführungsbeispiel gleich.

Somit bilden auch im vorliegenden Ausführungsbeispiel der Antennenträger 22 und der Chipträger 24 zusammen den mechanischen Schalter 20. Durch Verdrehen um die Drehachse D kann die Kontaktbaugruppe 12 mit jeder Gegenkontaktbaugruppe 14 eines NFC-Chips 10 elektrisch leitend in Kontakt gebracht werden, der in einen der Aufnahmeplätze 8b eingesetzt ist.

Im vorliegenden Ausführungsbeispiel verbinden Anschlussleitungen 58 den NFC-Chip 10 elektrisch leitend mit je einem Einzelkontakt 32 der Gegenkontaktbaugruppe 14. Dabei ist aus Gründen der Übersichtlichkeit nur eine der Anschlussleitungen 58 mit Bezugszeichen versehen worden. Die Einzelkontakte 32 der Gegenkontaktbaugruppe 14 sind im vorliegenden Ausführungsbeispiel als federnde Kontaktzungen ausgebildet, so dass die Einzelkontakte 32 der Gegenkontaktbaugruppe 14 federnd an die Einzelkontakte 30 der Kontaktbaugruppe 12 gepresst werden.

Im vorliegenden Ausführungsbeispiel sind die NFC-Chip-Aufnahmebaugruppe 6 und die NFC-Antenne 4 in Erstreckungsrichtung der Drehachse D hintereinander angeordnet. Dabei sind im vorliegenden Ausführungsbeispiel der Antennenträger 22 mit der NFC-Antenne 4 und der Chipträger 24 mit der NFC-Chip-Aufnahmebaugruppe 6 in einem Gehäuse 42 untergebracht. Das Gehäuse 42 kann aus Kunststoff, z.B. mittels Spritzguss, gefertigt sein. Das Gehäuse 42 bietet Schutz z.B. gegen Feuchtigkeit.

Im vorliegenden Ausführungsbeispiel ist das Gehäuse 42 zweiteilig mit einem Gehäuseoberteil 44 und einem Gehäuseunterteil 46 ausgebildet. Dabei ist im vorliegenden Ausführungsbeispiel im Gehäuseoberteil 44 der Antennenträger 22 mit der NFC-Antenne 4 angeordnet, während im Gehäuseunterteil 46 der Chipträger 24 mit der NFC-Chip-Aufnahmebaugruppe 6 angeordnet ist.

Sowohl das Gehäuseoberteil 44 als auch das Gehäuseunterteil 46 sind im vorliegenden Ausführungsbeispiel wannenförmig und rotationssymmetrisch zur Drehachse D ausgebildet. Somit weist die NFC-Auslesevorrichtung 2 im vorliegenden Ausführungsbeispiel eine optisch ansprechende, im Wesentlichen rotationssymmetrische Gehäuseform auf, die an ein Amulett erinnert. Um die NFC-Auslesevorrichtung 2 leicht befestigen zu können, ist an dem Gehäuse 42 im vorliegenden Ausführungsbeispiel eine Öse 48 angeformt.

Ferner weisen gemäß dem vorliegenden Ausführungsbeispiel die NFC-Chips 10 Kugelscharniere 50 zur Fixierung der NFC-Chips 10 in einem der Aufnahmeplätzen 8 der NFC-Chip-Aufnahmebaugruppe 6 auf.

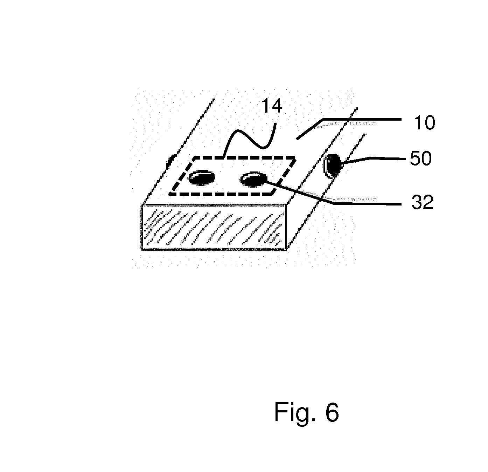

Es wird nun zusätzlich auf die Figur 6 Bezug genommen.

Die Figur 6 zeigt den NFC-Chip 10 mit der Gegenkontaktbaugruppe 14 und den Kugelscharnieren 50 zur Fixierung des NFC-Chips 10 in einem der Aufnahmeplätzen 8 der NFC-Chip-Aufnahmebaugruppe 6.

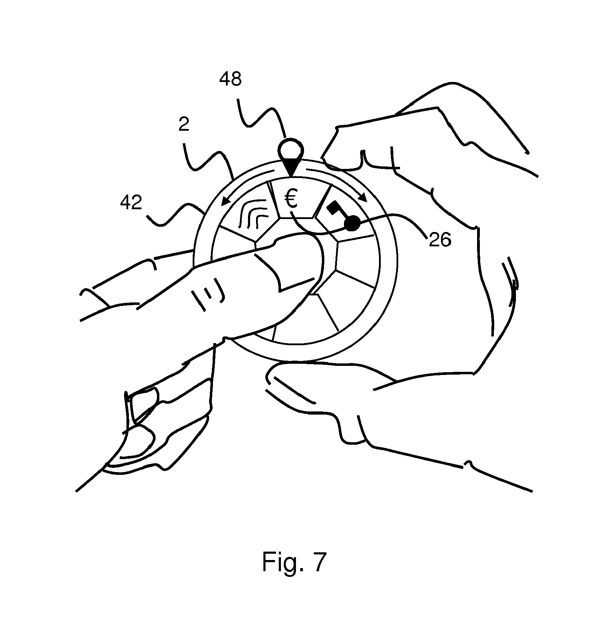

Es wird nun zusätzlich auf die Figur 7 Bezug genommen.

Die Figur 7 zeigt, dass im vorliegenden Ausführungsbeispiel das Gehäuse 42 der NFC-Auslesevorrichtung 2 eine Fensteröffnung 26 aufweist. Die Fensteröffnung 26 ist in einem Bereich angeordnet, in dem sich der NFC-Chip 10 befindet, dessen Gegenkontaktbaugruppe 14 mit der Kontaktbaugruppe 12 der NFC-Auslesevorrichtung 2 elektrisch leitend in Kontakt steht. Somit ist der elektrisch kontaktierte NFC-Chip 10 für einen Nutzer durch die Fensteröffnung 26 sichtbar und identifizierbar. Dies erleichtert für einen Nutzer die Auswahl des gewünschten NFC-Chips 10. Dabei kann jeder NFC-Chip 10 mit einem Aufdruck versehen sein.

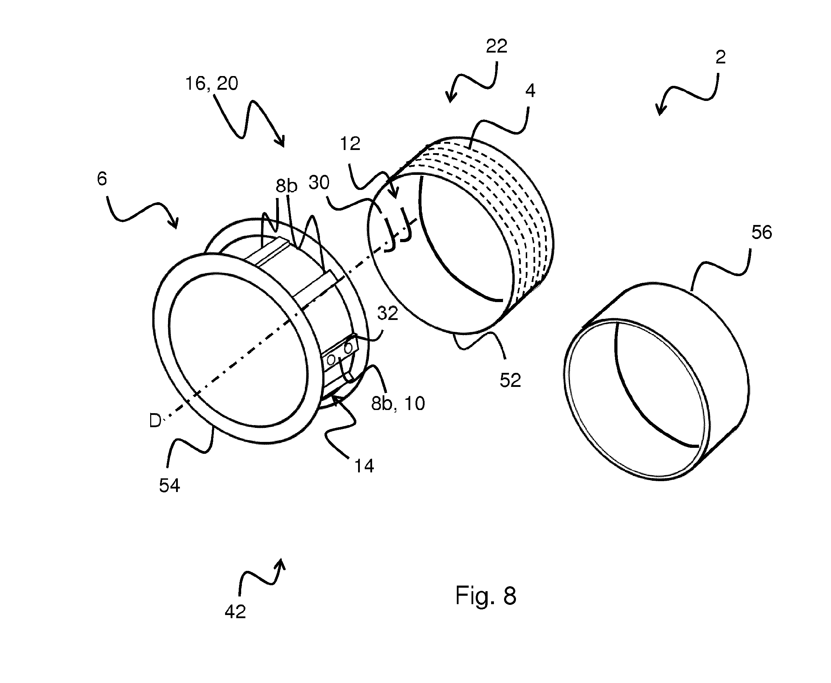

Es wird nun zusätzlich auf die Figur 8 Bezug genommen.

Das in der Figur 8 dargestellte Ausführungsbeispiel unterscheidet sich von dem in den Figur 4 bis 7 gezeigten Ausführungsbeispiel dadurch, dass die NFC-Antenne 4 und die NFC-Chip-Aufnahmebaugruppe 6 in radialer Richtung von der Drehachse D ausgehend hintereinander angeordnet sind. Auch in dem in der Figur 8 dargestellte Ausführungsbeispiel die Aufnahmeplätze 8b zum lösbaren elektrisch leitenden Kontaktieren von in den Aufnahmeplätzen 8b eingesetzten NFC-Chips 10 ausgebildet.

Auch im vorliegenden Ausführungsbeispiel sind die Aufnahmeplätze 8b der Aufnahmebaugruppe 6 zur Aufnahme von NFC-Chips 10 entlang einer Kreisbahn um die Drehachse D angeordnet. Jedoch umfasst das Gehäuse 42 gemäß diesen Ausführungsbeispiel einen Innenring 54, wobei die Aufnahmeplätzen 8b auf einer ringförmigen Außenseite des Innenrings 54 angeordnet sind. Daher ist im vorliegenden Ausführungsbeispiel die Gegenkontaktbaugruppe 14 mit ihren Einzelkontakten 32 an der ringförmigen Außenseite des Innenrings 52 angeordnet.

Ferner weist im vorliegenden Ausführungsbeispiel das Gehäuse 42 einen Außenring 52 auf. Der Außenring 52 dient im vorliegenden Ausführungsbeispiel als Antennenträger 22 für die NFC-Antenne 4. Im vorliegenden Ausführungsbeispiel ist auf der ringförmigen Außenseite des Außenrings 52 die NFC-Antenne 4 angeordnet, während die Kontaktbaugruppe 12 mit den Einzelkontakten 30 auf der Innenseite des Außenrings 52 angeordnet ist.

Das Gehäuse 42 wird im vorliegenden Ausführungsbeispiel komplettiert durch eine ebenfalls ringförmig ausgebildete Außenverkleidung 56, die insbesondere die NFC-Antenne 4 abdeckt. Im vorliegenden Ausführungsbeispiel sind der Außenring 52 und/oder der Innenring 54 und/oder die Außenverkleidung 56 aus Kunstsoff, z.B. mittels Spritzguss, gefertigt. Insbesondere die Außenverkleidung 56 ist im vorliegenden Ausführungsbeispiel aus einem elektromagnetische Wellen nicht abschirmenden Material gefertigt.

Im vorliegenden Ausführungsbeispiel sind der Außenring 52, der Innenring 54 und die Außenverkleidung 56 ringförmig ausgebildet. Somit weist die NFC-Auslesevorrichtung 2 im vorliegenden Ausführungsbeispiel eine optisch ansprechende, ringförmige Gehäuseform auf, die an einen Schmuckring erinnert.

Ferner bilden auch im vorliegenden Ausführungsbeispiel der Antennenträger 22 und der Chipträger 24 zusammen den mechanischen Schalter 20. Durch Verdrehen um die Drehachse D kann die Kontaktbaugruppe 12 mit jeder Gegenkontaktbaugruppe 14 eines NFC-Chips 10 elektrisch leitend in Kontakt gebracht werden, der in einen der Aufnahmeplätze 8b eingesetzt ist, während die anderen NFC-Chips 10 von der NFC-Antenne 4 elektrisch getrennt sind. Dann können Daten und/oder Programme von dem ausgewählten NFC-Chip 10 ausgelesen werden.

Abweichend von den bisherigen Ausführungsbeispielen kann z.B. ein elektrischer Antrieb, z.B. mit einem elektrischen Motor, vorgesehen sein, um eine Verlagerung des Antennenträgers 22 und des Chipträgers 24 zueinander zu bewirken, z.B. translatorisch entlang der Achse A oder durch eine Drehbewegung um die Drehachse D. Ferner kann abweichend von den bisherigen Ausführungsbeispielen, vorgesehen sein, dass eine optische Anzeige, z.B. mit einer Beleuchtung vorgesehen ist, die einem Nutzer Informationen betreffend den ausgewählten NFC-Chip 10 anzeigt. Eine Auswahl des gewünschten NFC-Chips 10 kann dabei z.B. mit einem Wahlschalter 16 erfolgen, der eine Mehrzahl von steuerbaren Halbleiterschaltelementen 18 aufweist. Somit sind dann keinerlei bewegliche Komponenten vorgesehen.

Im Betrieb sind die NFC-Chips 10 mit dem Wahlschalter 18 elektrisch leitend verbunden, bzw. ist in einigen der Aufnahmeplätze 8a, 8b der NFC-Chip-Aufnahmebaugruppe 6 je ein NFC-Chip 10 eingesetzt.

Auf den NFC-Chips 10 ist je eine App, also eine Anwendungssoftware, z.B. im Bereich mobiler Betriebssysteme, abgespeichert. Die Apps können ausgebildet sein, Aktionen oder Funktionen eines Smartphone (nicht dargestellt) zu steuern.

Will nun ein Nutzer eine Aktion auf seinem Smartphone durchführen, z.B. das Aktivieren einer WLAN-Funktion, sind nicht mehr wie z.B. bei einem Android-Smartphone die Schritte Aufrufen des Hauptmenüs, Durchblättern des Hauptmenüs und Auswählen der App Einstellungen, Scrollen zum Menüpunkt drahtlose Netzwerke und Einschalten der WLAN-Funktion durchzuführen. Vielmehr wählt der Nutzer einen NFC-Chip 10 aus, auf dem eine App "WLAN-Funktion aktivieren" abgespeichert ist, aus. Das kann durch Erzeugen eines Ansteuersignals für ein steuerbares Halbleiterschaltelement 18 des Wahlschalter 16 durch eine Eingabeeinrichtung (nicht dargestellt), durch Verlagern in Richtung der Achse A oder durch Verdrehen um die Drehachse D erfolgen, bis der entsprechende NFC-Chip 10 mit der NFC-Antenne 4 elektrisch leitend verbunden ist. Anschließend nähert der Nutzer sein Smartphone derart nahe an die NFC-Auslesevorrichtung 2 an, dass eine Daten- bzw. Programmübertragung möglich ist. Nach erfolgter Über-tragung aktiviert dann ein Datensatz mit Steuerungsfunktion die WLAN-Funktion. Somit ist zeitaufwändiges Durchlaufen der oben beschriebenen Menüführung nicht mehr nötig. Es versteht sich von selbst, dass alternativ auch Datensätze mit Steuerungsfunktionen übertragen werden können, die z.B. Bluetooth- oder GPS-Einstellungen oder Nutzerprofile betreffen.

Daher ist für einen Nutzer eine Zeitersparnis gegeben und der Bedienkomfort gesteigert. Ferner ergibt sich eine Kostenersparnis, dass da nur eine einzige NFC-Antenne 4 für eine Mehrzahl von NFC-Chips 10 nötig ist. Des Weiteren ist nur eine einzige NFC-Antenne 4 erforderlich, was zu einer Bauraumersparnis führt, da nicht eine der Anzahl der NFC-Chips entsprechende Anzahl von Antenne erforderlich ist. Bei einer rotationssymmetrischen Ausbildung können die Abmessungen der NFC-Antenne 4 vergrößert werden, da der ganze Ringumfang genutzt werden kann. Schließlich ist ein korrektes Scannen des entsprechenden NFC-Chips 10 gewährleistet, da immer nur einer der NFC-Chips 10 elektrisch leitend mit der NFC-Antenne 4 verbunden ist, wobei unabhängig vom einer Kontaktstelle am Gehäuse 42 der NFC-Auslesevorrichtung 2 immer der richtige NFC-Chip 10 ausgelesen und damit die korrekte Funktion ausgelöst wird.

### Bezugszeichenliste

- 2: NFC-Auslesevorrichtung
- 4: NFC-Antenne
- 6: NFC-Chip-Aufnahmebaugruppe
- 8a, 8b: Aufnahmeplatz
- 10: NFC-Chip
- 12: Kontaktbaugruppe
- 14: Gegenkontaktbaugruppe
- 16: Wahlschalter
- 18: Halbleiterschaltelement
- 20: mechanischer Schalter
- 22: Antennenträger
- 24: Chipträger
- 26: Fensteröffnung
- 28: Verbindungsleitung
- 30: Einzelkontakt
- 32: Einzelkontakt
- 34: Sammelabschnitt
- 36: Einzelleitung
- 38: Vertiefung
- 40: Rastverbindung
- 42: Gehäuse
- 44: Gehäuseoberteil
- 46: Gehäuseunterteil
- 48: Öse
- 50: Kugelscharnier
- 52: Außenring
- 54: Innenring
- 56: Außenverkleidung
- 58: Anschlussleitung
- A: Achse
- D: Drehachse

## Patentansprüche

1. NFC-Auslesevorrichtung (2) mit einer NFC-Antenne (4) und mit einer NFC-Chip-Aufnahmebaugruppe (6) mit einer Mehrzahl von Aufnahmeplätzen (8a, 8b) für je einen NFC-Chip (10), wobei ein Wahlschalter (16) vorgesehen ist, mit dem jeweils einer der NFC-Chips (10) elektrisch leitend mit der NFC-Antenne (4) verbindbar ist, wobei der Wahlschalter (16) als mechanischer Schalter (20) ausgebildet ist, und der mechanische Schalter (20) einen Antennenträger (22) mit der NFC-Antenne (4) und eine Kontaktbaugruppe (12) aufweist, und der mechanische Schalter (20) einen Chipträger (24) mit der NFC-Chip-Aufnahmebaugruppe (6) aufweist, wobei der Antennenträger (22) und der Chipträger (24) verlagerbar miteinander verbunden sind, derart, dass die Kontaktbaugruppe (12) mit jeder Gegenkontaktbaugruppe (14) eines in einen der Aufnahmeplätze eingesetzten NFC-Chips (10) elektrisch leitend in Kontakt gebracht werden kann.

2. Auslesevorrichtung (2) nach Anspruch 1, wobei je ein Aufnahmeplatz (8a) elektrisch leitend mit einem NFC-Chip (10) fest verdrahtet ist.

3. Auslesevorrichtung (2) nach Anspruch 1, wobei die Aufnahmeplätze (8b) zum lösbaren elektrisch leitenden Kontaktieren von dem in den Aufnahmeplatz (8) eingesetzten NFC-Chips (10) ausgebildet sind.

4. NFC-Auslesevorrichtung (2) nacheinem der vorangehenden Ansprüche, wobei der Antennenträger (22) und der Chipträger (24) translatorisch entlang einer Achse (A) zueinander verlagerbar ausgebildet sind.

5. NFC-Auslesevorrichtung (2) nach einem der vorangehenden Ansprüche, wobei der Antennenträger (22) und der Chipträger (24) um eine Drehachse (D) zueinander verdrehbar ausgebildet sind.

6. NFC-Auslesevorrichtung (2) nach Anspruch 5, wobei die NFC-Chip-Aufnahmebaugruppe (6) und die NFC-Antenne (4) in Erstreckungsrichtung der Drehachse (D) hintereinander angeordnet sind.

7. NFC-Auslesevorrichtung (2) nach Anspruch 5, wobei die NFC-Chip-Aufnahmebaugruppe (6) und die NFC-Antenne (4) in radialer Richtung der Drehachse (D) hintereinander angeordnet sind.

8. NFC-Auslesevorrichtung (2) nach einem der vorangehenden Ansprüche, wobei die NFC-Auslesevorrichtung (2) eine Fensteröffnung (26) aufweist, die eine optische Identifizierung des NFC-Chips (10) erlaubt, dessen Gegenkontaktbaugruppe (14) mit der Kontaktbaugruppe (12) der NFC-Auslesevorrichtung (2) elektrisch leitend in Kontakt steht.

9. NFC-Auslesevorrichtung (2) nach einem der vorangehenden Ansprüche mit einer NFC-Antenne (4) und mit einer NFC-Chip-Aufnahmebaugruppe (6) mit einer Mehrzahl von Aufnahmeplätzen (8b) für je einen NFC-Chip (10), wobei jedem Aufnahmeplatz (8) eine Kontaktbaugruppe (12) zum lösbaren elektrisch leitenden Kontaktieren von einer Gegenkontaktbaugruppe (14) eines in einen der Aufnahmeplätze (8) eingesetzten NFC-Chips (10) zugeordnet ist.
